# EUROPEAN PATENT APPLICATION

(11) **EP 4 309 928 A1**
(43) Date of publication of application: **24.01.2024**
(21) Application number: 23186089.1
(22) Date of filing: 18.07.2023
(51) Int. Cl.: B60H 1/00, B60H 1/32, B60L 58/40

(54) **FUEL CELL ARCHITECTURE FOR TRANSPORT REFRIGERATION UNIT**

(30) Priority: 18.07.2022 US 202263390098 P
(71) Applicant: Carrier Corporation, Palm Beach Gardens, FL 33418 (US)
(72) Inventor: OGGIANU, Stella Maris, Palm Beach Gardens, 33418 (US); MAKWINSKI, Mark, Palm Beach Gardens, 33418 (US); VAN HASSEL, Bart Antonie, Palm Beach Gardens, 33418 (US)
(74) Representative: Dehns

(57) **Abstract**

A transport refrigeration system including a tractor, a container connected to the tractor, a refrigeration unit (30) for conditioning a compartment of the container, a first power source (70) associated with the container and operably coupled to the refrigeration unit (30), and a second power source (82) associated with the tractor wherein one or more components are shared between the first power source (70) and the second power source (82).

## Description

Embodiments of the invention relate to refrigeration systems, and more particularly, to transport refrigeration power systems.

Refrigerated trucks, trailers, and containers are commonly used to transport perishable cargo, such as, for example, produce, meat, poultry, fish, dairy products, cut flowers, vaccines and other fresh or frozen perishable products. Conventionally, transport refrigeration systems include a transport refrigeration unit having a refrigerant compressor, a condenser with one or more associated condenser fans, an expansion device, and an evaporator with one or more associated evaporator fans, which are connected via appropriate refrigerant lines in a closed loop refrigerant circuit. Air or an air/gas mixture is drawn from the interior volume of the cargo box by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo box.

The vehicle of a transport refrigeration system is typically powered by a first power source and the transport refrigeration unit used to cool the cargo with a cargo container of the transportation refrigeration system is typically powered by a separate second power source. In existing systems, both the vehicle and the transport refrigeration unit typically use power from sources like a diesel engine. In newer systems, the power for the transport refrigeration unit may be provided from a fuel cell located on board the transport refrigeration system. However, by using distinct power sources for the vehicle and the transport refrigeration unit, the size and complexity of the transport refrigeration system is increased.

According to a first aspect of the present invention, a transport refrigeration system includes a tractor, a container connected to the tractor, a refrigeration unit for conditioning a compartment of the container, a first power system associated with the cargo container and operably coupled to the refrigeration unit, and a second power system associated with the tractor. One or more components are shared between the first power system and the second power system.

The first power system may include a first power source and the second power system may include a second power source, both the first power source and the second power source comprising a fuel cell.

The transport refrigeration system may comprise a single fuel source operably coupled to both the first power source and the second power source.

The first power system may include at least one first power electronics device connected to the first power source and operable to deliver power from the first power source to the refrigeration unit and the second power system may include at least one second power electronics device connected to the second power source and operable to deliver power from the second power source to at least one subsystem of the tractor.

The at least one subsystem may comprise a propulsion system.

The container may be selectively disconnectable from the tractor, and the refrigeration unit is operable when the container is separated from the tractor.

The first power system may further comprise an auxiliary fuel source mounted to the container, the first power source being coupled to the auxiliary fuel source.

The first power system may further comprise an auxiliary power source mounted to the container, the auxiliary power source being operably coupled to the refrigeration unit.

At least one of the first power system and the second power system may be connectable to an auxiliary power source located remotely from the container.

The auxiliary power source may be one of a power grid and a hydrogen filling station.

According to a second aspect of the present invention, a transport refrigeration system includes a tractor having at least one subsystem, a container connected to the tractor, a refrigeration unit for conditioning a compartment of the container and a power system including a power source associated with both the refrigeration unit of the container and the at least one subsystem of the tractor.

The transport refrigeration system may comprise a fuel source operably coupled to the power source and at least one power electronics device operably coupled to the power source, the refrigeration unit, and the at least one subsystem.

The fuel source may be mounted to the tractor.

The transport refrigeration system may comprise at least one energy storage device operably coupled to the at least one power electronics device.

The container may be selectively disconnectable from the tractor, and the refrigeration unit is operable when the cargo container is separated from the tractor.

The power system may further comprise at least one auxiliary power electronics device operably coupled to the refrigeration unit and an auxiliary power source operably couplable to the at least one auxiliary power electronics device. The at least one auxiliary power electronics device is mounted to the container.

The auxiliary power source and the power source may be similar.

The auxiliary power source may be mounted to the cargo container.

The auxiliary power source may include an energy storage device.

The auxiliary power source may be located remotely from the cargo container.

A detailed description of one or more embodiments of the disclosed apparatus and method are presented herein by way of exemplification and not limitation with reference to the Figures. The following descriptions should not be considered limiting in any way. With reference to the accompanying drawings, like elements are numbered alike:
FIG. 1 is a perspective view of a transport refrigeration system;
FIG. 2 is a schematic illustration of a transport refrigeration unit of a transport refrigeration system;
FIG. 3 is a schematic diagram of the power systems associated with the refrigeration unit and the tractor of the transport refrigeration system;
FIG. 4 is another schematic diagram of the power systems associated with the refrigeration unit and the tractor of a transport refrigeration system according to an embodiment;
FIG. 5 is a schematic diagram representing a portion of the power system located at the container separable from the tractor;
FIG. 6 is another schematic diagram of a power system associated with the refrigeration unit and the tractor of a transport refrigeration system;
FIG. 7 is a schematic diagram representing a portion of the power system located at the container separable from the tractor.

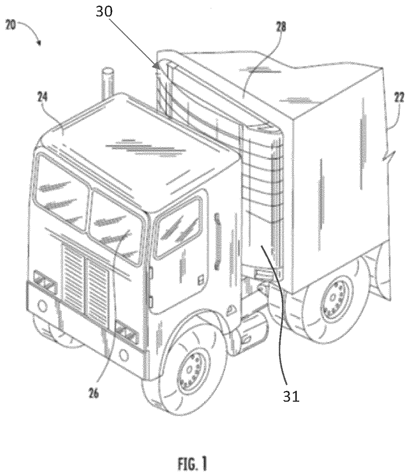

With reference now to FIG. 1, an exemplary transport refrigeration system 20 is illustrated. In the illustrated, the transport refrigeration system 20 is shown as a trailer system. As shown, the transport refrigeration system 20 includes a container, trailer, or chassis thereof 22 being towed or otherwise transported by a tractor 24 including an operator's compartment or cab 26 and also including an engine or other power source, such as a fuel cell for example, which acts as the drivetrain system of the transport refrigeration system 20. The container 22 and the tractor 24 may be permanently coupled or integrally formed, or in some configurations, the container 22 may be selectively disconnectable from the tractor 24, such as to park the container 22 for example. It should be appreciated by those of skill in the art that although the container 22 is described herein as a cargo container with respect to a trailer system, in other configurations the container 22 of the transport refrigeration system 20 may be any suitable container, such as a shipping container that is shipped by rail or sea (via a watercraft) for example, or any other suitable container, without use of a tractor 24.

A refrigeration unit 30 is operably coupled to the container 22 and is configured to maintain cargo located within the container 22 at a selected temperature by cooling and/or heating the internal cargo space of the container 22. As shown in FIG. 1, the refrigeration unit 30 may include a housing 31 that is typically affixed to the front wall 28 of the container 22. Where the container 22 is part of a trailer system, a power source for operating the refrigeration unit 30 may be directly integrated into the refrigeration unit 30. Where the container 22 is another type of container, the power source required to operate the refrigeration unit 30 may be separate or disconnectable from the refrigeration unit 30, and in some configurations, separate or disconnectable from the container 22.

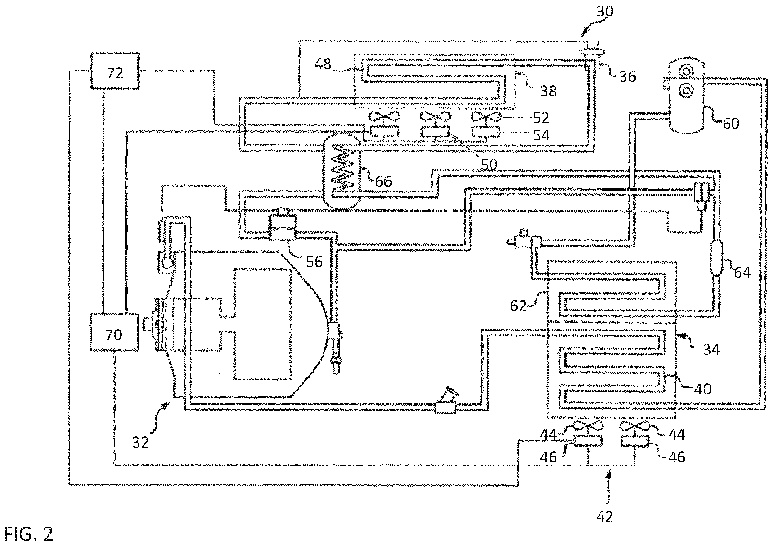

With reference now to FIG. 2, a schematic diagram of an exemplary refrigeration unit 30 is illustrated. The refrigeration unit 30 includes a compressor 32, a heat rejection heat exchanger or condenser 34, an expansion valve 36, and a heat absorption heat exchanger or evaporator 38 fluidly coupled to form a closed loop refrigeration circuit. During operation of the refrigeration unit 30, refrigerant R enters the compressor 32 and is compressed to a higher temperature and pressure. From the outlet of the compressor 32, the refrigerant gas is then provided to the condenser 34. In the illustrated, the condenser 34 is an air-cooled condenser such that a flow of air across the condenser coils 40 cools the refrigerant gas R to its saturation temperature. By removing latent heat, the refrigerant gas within the condenser 34 condenses to a high pressure/high temperature liquid. The air flow across the condenser 34 may be energized by a condenser fan assembly 42 including one or more fans 44, such as two fans for example. As shown, each fan 44 may be driven by a separate fan motor 46.

In a refrigeration unit 30 having a basic vapor compression cycle, the flow output from the condenser 34 is provided directly to a thermostatic expansion valve 36 and evaporator 38. As the liquid refrigerant R passes through the orifice of the expansion valve 36, some of it vaporizes into a gas. Return air from the refrigerated space flows over the heat transfer surface of an evaporator 38. As refrigerant flows through tubes 48 in the evaporator 38, the remaining liquid refrigerant R absorbs heat from the return air, and in so doing, is vaporized. The air flow across the evaporator 38 may be energized by an evaporator fan assembly 50 including at least one fan 52 and a corresponding fan motor 54. From the evaporator 38, the vapor then flows through a suction modulation valve 56 back to an inlet of the compressor 32. A thermostatic expansion valve bulb or sensor (not shown) may be located at an evaporator outlet tube. The bulb is intended to control the thermostatic expansion valve 36, thereby controlling refrigerant super-heating at the evaporator outlet tubing.

In the illustrated, the refrigeration unit 30 includes a plurality of components arranged between the condenser 34 and the expansion valve 36. As shown, a receiver 60 is arranged directly downstream from the outlet of the condenser 34. The receiver 60 is configured to provide storage for excess liquid refrigerant during low temperature operation. From the receiver 60, the liquid refrigerant R may pass through a subcooler heat exchanger 62. The subcooler 62 may be arranged in-line with and downstream from the condenser 34 such that the air flow from the at least one fan assembly 42 moves across the condenser 34 and the subcooler 62 in series. In a configuration, at the outlet of the subcooler 62, the refrigerant R is provided to a filter dryer 64 that keeps the refrigerant cool and dry, and in some embodiments to a heat exchanger 66 that increases the refrigerant subcooling. In such configurations, the refrigerant provided at the outlet of this heat exchanger 66 is delivered to the thermostatic expansion valve 36.

The refrigeration unit 30 may include a power source 70 that is capable of powering some or all of the electric or electronic components of the refrigeration unit 30. For example, the compressor 32 may be a compressor assembly including an electric motor associated therewith and electricity from the power source 70 may be provided to the motor of the compressor 32. Alternatively, or in addition, the fan motors 46, 54 associated with both the condenser 34 and the evaporator 38 fan assemblies 42, 50 are configured to receive power from the power source 70. The power source 70 may include at least one fuel cell, such as a single fuel cell, or alternatively a plurality of fuel cells or a fuel cell system including a battery, suitable to provide enough power for all of the dynamic components of the refrigeration unit 30. The power source 70 may be located remotely from the remainder of the refrigeration unit 30, such as at a location underneath the trailer 22 for example, or alternatively, may be arranged within the housing 31 (FIG. 1) of the refrigeration unit 30.

A controller 72, such as a microprocessor, may be programmed to control power generation and/or power usage and the operation of various electrically powered components within the transport refrigeration system 20. For example, the controller 72 may be operable to regulate the power supplied to the condenser fan motors 46 and the evaporator fan motors 54. Programming such controllers is within the skill in the art.

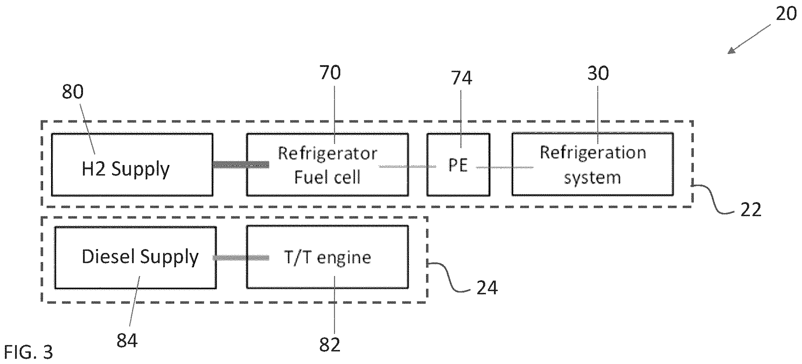

Where the power source of the refrigeration unit 30 is not an engine, such as where the power source is a direct current (DC) power source for example, the refrigeration unit 30 may additionally be equipped with one or more power electronic devices, illustrated schematically at 74 (see FIG. 3), operable to control and convert electrical power as needed. The power electronic devices 74 may be configured to control the flow of electrical power between one or more of the power source 70, a battery, a motor, a generator, the refrigeration unit 30, and in some configurations, a power system of the tractor 24 for example. Examples of such power electronic devices 74 include, but are not limited to a direct current to alternating current (DC/AC) inverter (or power inverter) to convert the DC power to AC power, an alternating current to direct current (AC/DC) inverter, a transformer to increase the AC voltage level, a boost converter, a sine filter, and a power converter (e.g., direct current to direct current (DC/DC)) that typically manages and transfers power from a voltage source.

A schematic diagram of an exemplary transport refrigeration system 20 is illustrated in FIG. 3. In the illustrated, a first power system of the cargo container 22 and a second power system of the tractor 24 are completely separate systems. As shown, the power system of the cargo container 22 includes a first power source 70 operably coupled to a first fuel source 80. In the illustrated, the first fuel source 80 is a supply of hydrogen and the first power source 70 is a fuel cell system including at least one fuel cell as previously described. One or more power electronic devices 74, such as arranged in the form of a power electronics package for example, are coupled to the first power source 70 and to the refrigeration unit 30 and are operable to provide power from the first power source 70 to operate the refrigeration unit 30.

The power system of the tractor 24 includes a second power source 82, distinct from the first power source 70, and is configured to receive fuel from a second fuel source 84, distinct from the first fuel source 80. In a configuration, the second power source 82 is an engine, such as a diesel engine, and the second fuel source is a supply of diesel. Because the first and second power sources 70, 82 are different types of power sources, the first and second fuel sources 80, 84 are inherently different as well. However, in other configurations, the second power source 82 need not be an engine. The second power source 82 may the same type of power source as the first power source 70 and may have similar or different configurations. For example, the second power source 82 may be a fuel cell system including one or more fuel cells and the second fuel source 84 may also be a supply of hydrogen. In such configurations, the fuel sources 80, 84 for the first and second power sources 70, 82 remain separate and distinct.

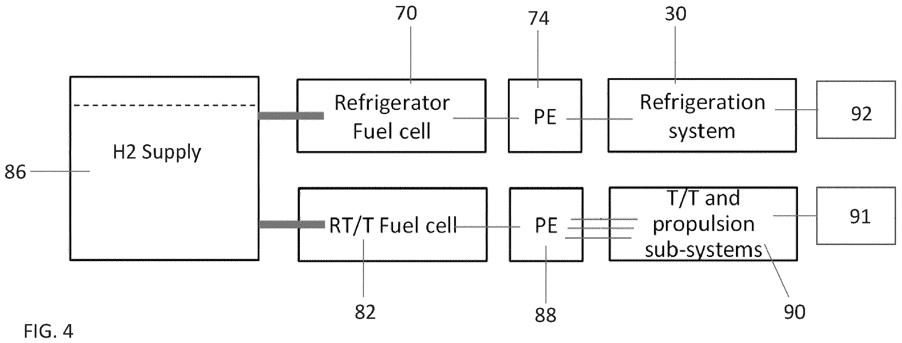

With reference now to FIG. 4, in configurations where the first and second power sources 70, 82 are the same type of power source or are different types of power sources that use a common fuel, such as a fuel cell and a microturbine that burns hydrogen for example, one or more components of the first and second power systems may be shared. As shown, a single fuel source 86, such as one or more tanks of hydrogen for example, may be operably coupled to both the first and second power sources 70, 82. In such configurations, the fuel source 86 may be mounted to the tractor 24, such as within the clearance defined between the rear of the tractor 24 and the front wall 28 and refrigeration unit 30 of the cargo container 22. However, configurations where the fuel source 86 is located at the cargo container 22 are also contemplated herein. At least one second power electronics device 88 separate from the at least one first power electronics device 74 associated with the first power source 70 may be used to deliver power from the second power source 82 to at least one of a propulsion system operable to drive the tractor 24 and one or more sub-systems associated with operation of the tractor 24, illustrated schematically at 90.

At least one additional energy storage device 91, 92 may be operably coupled to each of the refrigeration unit 30 and the at least one of a propulsion system operable to drive the tractor 24 and one or more sub-systems associated with operation of the tractor to deliver power thereto to assist with operation during a peak power demand. Although the energy storage devices 91, 92 are illustrated as being directly connected to the refrigeration unit 30 and the at least one of a propulsion system operable to drive the tractor 24 and one or more sub-systems associated with operation of the tractor 24, it should be understood that the energy storage devices 91, 92 may alternatively or additionally be connected to at least one of the power sources 70, 82 and the power electronics 74, 88.

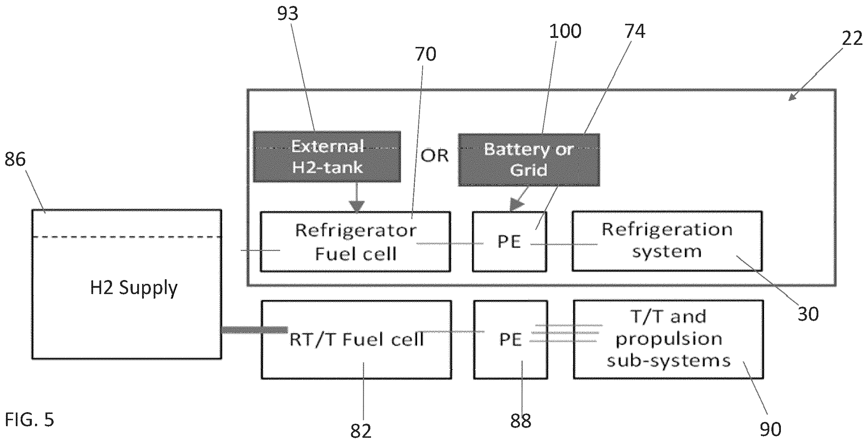

As previously described herein, the cargo container 22 including the refrigeration unit 30 may be selectively separable from the tractor 24. As a result, the first power source 70 may be selectively disconnected from the fuel source 86. In a configuration, best shown in FIG. 5, the refrigeration unit 30 is operable even when the cargo container 22 is not connected to the tractor 24, and therefore is not connected to the fuel source 86 shared by the first and second power sources 70, 82. In such instances, the cargo container 22 may include an auxiliary fuel source 93, such as a hydrogen tank for example, mounted directly or indirectly to a portion of the cargo container 22. Alternatively, or in addition, the auxiliary fuel source 93 may be located remotely from the cargo container 22, such as a hydrogen filling station for example.

The power demands of the refrigeration unit 30 or other components of the cargo container 22 may be met by an auxiliary power source 100. For example, the auxiliary power source 100 may be an energy storage device, such as a battery 92 mounted to the cargo container 22, or may be a power grid to which the power system of the cargo container 22 is connected when the cargo container 22 is parked at a loading dock for example. In such instances, power from the power grid may be provided to the one or more power electronics device 74 for controlled distribution to meet the demands of the various components of the refrigeration unit 30, or in some configurations, may be provided directly to the refrigeration unit 30. Although the auxiliary power source 100, such as an energy storage device, is illustrated as being connected to the cargo container 22, it should be understood that in other configurations, the battery 92, or alternatively, another battery could be connected to the power electronics 88 of the tractor 24.

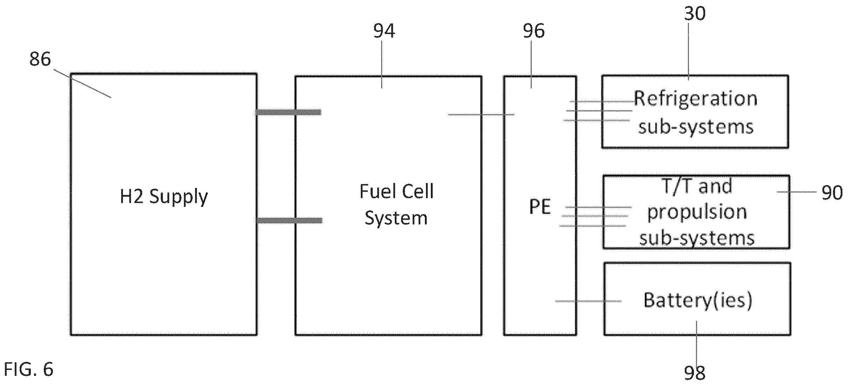

With reference now to FIG. 6, the power system associated with the cargo container 22 and the power system associated with the tractor 24 may be fully integrated. In the illustrated configuration, the one or more systems of the tractor 24 and the refrigeration unit 30 are powered by a single power source, illustrated schematically at 94, operably coupled to a single fuel source 86. As previously described, in such configurations, the single power source 94 may be a fuel cell system including one or more fuel cells and the fuel source 86 may be one or more tanks of hydrogen. By eliminating the separate power sources, at least one power electronics device, represented schematically at 96, is configured to deliver power to the refrigeration unit 30 and to any other subsystems thereof, as well as to the propulsion system 90 of the tractor 24 or one or more sub-systems associated with operation of the tractor 24. In a configuration, the transport refrigeration system 20 additionally includes at least one energy storage device 98, such as a battery for example, separate from the power source 94. In such configurations, the at least one power electronics device 96 may operably couple the energy storage device 98 to the power source 94 and/or to one or more power demands of the transport refrigeration system 20, such as the refrigeration unit 30 or the subsystems thereof, and the propulsion system and other subsystems 90 of the tractor 24.

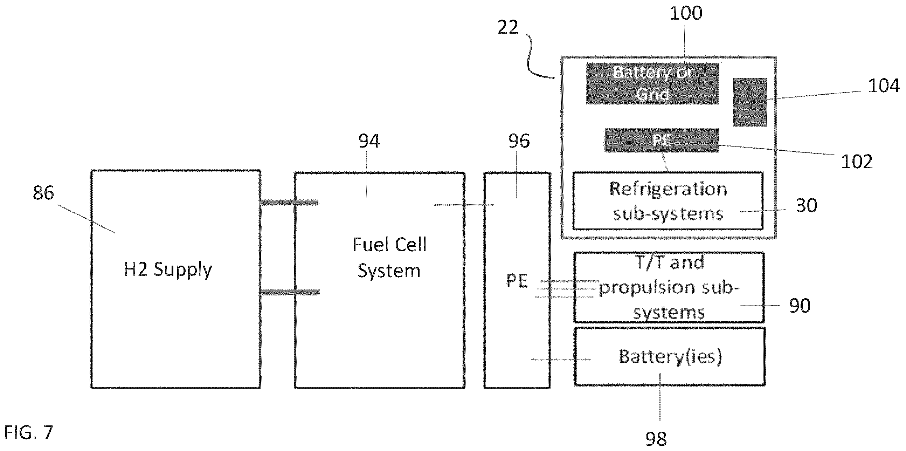

With reference now to FIG. 7, in configurations where the refrigeration unit 30 is operable even when the cargo container 22 is separated from the tractor 24, the cargo container 22 may include or may be connectable to an auxiliary power source 100 as previously described with respect to FIG. 5. Further, the cargo container 22 may include at least one auxiliary power electronics device 102. Further, in a configuration, the auxiliary power source 100 may be an energy storage device, such as a battery for example. Alternatively, or in addition, the cargo container 22 may include a fuel cell system 104, such as with hydrogen storage for example. The one or more auxiliary power electronics devices 102 are operable to provide power from the auxiliary power source 100 or the fuel cell system 104 to the refrigeration unit 30. Either the auxiliary power source 100 or the fuel cell system 104 would be utilized when the cargo container 22 is uncoupled from the remainder of the system. In such configurations, the power electronics devices 102 may include a unidirectional or bidirectional DC/DC boost converter. When the DC/DC boost converter is bidirectional, the boost converter enables charging of the energy storage device by a power grid and powering the refrigeration subsystems from the energy storage device when the power grid is unavailable.

A transport refrigeration system 20 where the power system associated with the cargo container 22 is at least partially integrated with the power system associated with tractor 24 will have a simplified system architecture resulting in a reduced system size and cost.

The term "about" is intended to include the degree of error associated with measurement of the particular quantity based upon the equipment available at the time of filing the application.

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present invention has been described with reference to an exemplary embodiment or embodiments, it will be understood by those skilled in the art that various changes may be made and equivalents may be substituted for elements thereof without departing from the scope of the invention, as defined in the appended claims. In addition, many modifications may be made to adapt a particular situation or material to the teachings of the above disclosure without departing from the scope of the claims. Therefore, it is intended that the prevent invention not be limited to the particular embodiment disclosed as the best mode contemplated for carrying out this invention, but that the invention will include all embodiments falling within the scope of the claims.

## Claims

**1.** A transport refrigeration system (20) comprising:
a tractor (24);
a container (22) connected to the tractor (24);
a refrigeration unit (30) for conditioning a compartment (26) of the container (22);
a first power system associated with the cargo container (22) and operably coupled to the refrigeration unit (30); and
a second power system associated with the tractor (24), wherein one or more components are shared between the first power system and the second power system.

**2.** The transport refrigeration system (20) of claim 1, wherein the first power system includes a first power source (70) and the second power system includes a second power source (82), both the first power source (70) and the second power source (82) comprising a fuel cell.

**3.** The transport refrigeration system (20) of claim 2, further comprising a single fuel source (86) operably coupled to both the first power source (70) and the second power source (82).

**4.** The transport refrigeration system (20) of claim 2 or 3, wherein the first power system includes at least one first power electronics device (74) connected to the first power source (70) and operable to deliver power from the first power source (70) to the refrigeration unit (30) and the second power system includes at least one second power electronics device (88) connected to the second power source (82) and operable to deliver power from the second power source (82) to at least one subsystem (90) of the tractor (24); and optionally
wherein the at least one subsystem (90) comprises a propulsion system (90).5.
The transport refrigeration system (20) of any of claims 2 to 4, wherein the container (22) is selectively disconnectable from the tractor (24), and the refrigeration unit (30) is operable when the container (22) is separated from the tractor (24).

**6.** The transport refrigeration system (20) of any of claims 2 to 5, wherein the first power system further comprises an auxiliary fuel source (93) mounted to the container (22), the first power source (70) being coupled to the auxiliary fuel source (93); and/or wherein the first power system further comprises an auxiliary power source (100) mounted to the container (22), the auxiliary power source (100) being operably coupled to the refrigeration unit (30).

**7.** The transport refrigeration system (20) of any of claims 2 to 6, wherein at least one of the first power system and the second power system is connectable to an auxiliary power source (100) located remotely from the container (22); and optionally wherein the auxiliary power source (100) is one of a power grid and a hydrogen filling station.

**8.** A transport refrigeration system (20) comprising:
a tractor (24) having at least one subsystem (90);
a container (22) connected to the tractor (24);
a refrigeration unit (30) for conditioning a compartment (26) of the container (22); and
a power system including a power source (94) associated with both the refrigeration unit (30) of the container (22) and the at least one subsystem of the tractor (24).

**9.** The transport refrigeration system (20) of claim 8, further comprising:
a fuel source (86) operably coupled to the power source (94); and
at least one power electronics device (96) operably coupled to the power source (94), the refrigeration unit (30), and the at least one subsystem (90);
optionally wherein the fuel source (86) is mounted to the tractor (24).

**10.** The transport refrigeration system (20) of claim 9, further comprising at least one energy storage device (98) operably coupled to the at least one power electronics device (96).

**11.** The transport refrigeration system (20) of any of claims 8 to 10, wherein the container (22) is selectively disconnectable from the tractor (24), and the refrigeration unit (30) is operable when the cargo container (22) is separated from the tractor (24).

**12.** The transport refrigeration system (20) of any of claims 8 to 11, wherein the power system further comprises:
at least one auxiliary power electronics device (102) operably coupled to the refrigeration unit (30), the at least one auxiliary power electronics device (102) being mounted to the container (22); and
an auxiliary power source (100) operably couplable to the at least one auxiliary power electronics device (102).

**13.** The transport refrigeration system (20) of claim 12, wherein the auxiliary power source (100) and the power source (94) are similar; and/or
wherein the auxiliary power source (100) includes an energy storage device

**14.** The transport refrigeration system (20) of claim 12 or 13, wherein the auxiliary power source (100) is mounted to the cargo container (22); or
wherein the auxiliary power source (100) is located remotely from the cargo container (22).

**15.** The transport refrigeration system (20) of any of claims 12 to 14, wherein the auxiliary power source (100) includes an energy storage device.
